# EUROPÄISCHE PATENTSCHRIFT

(11) **EP 4 327 566 B1**
(45) Veröffentlichungstag und Bekanntmachung des Hinweises auf die Patenterteilung: **24.07.2024**
(21) Anmeldenummer: 23726536.8
(22) Anmeldetag: 22.05.2023
(51) Int. Cl.: H04R 5/02, B60R 16/037, H04R 5/04, H04S 7/00

(54) **VERFAHREN ZUR BESTIMMUNG DER KOPFBEZOGENEN ÜBERTRAGUNGSFUNKTION**
METHOD FOR DETERMINING THE HEAD RELATED TRANSFER FUNCTION
PROCÉDÉ DE DÉTERMINATION DE LA FONCTION DE TRANSFERT RELATIVE À LA TÊTE

(30) Priorität: 15.06.2022 DE 102022002171
(43) Veröffentlichungstag der Anmeldung: 28.02.2024
(73) Patentinhaber: Mercedes-Benz Group AG, 70372 Stuttgart (DE)
(72) Erfinder: MOELLER, Rainer, 71159 Moetzingen (DE)
(74) Vertreter: Novagraaf Group
(86) Internationale Anmeldenummer: PCT/EP2023/063631
(87) Internationale Veröffentlichungsnummer: WO 2023/241883

(56) Entgegenhaltungen:
- DE-A1- 102014 210 105
- DE-A1- 102020 108 449
- JP-A- 2010 067 020
- US-A1- 2013 194 107

## Beschreibung

Die Erfindung betrifft ein Verfahren zur Bestimmung der kopfbezogenen bzw. außenohrbezogenen Übertragungsfunktion nach der im Oberbegriff von Anspruch 1 näher definierten Art. Außerdem betrifft die Erfindung ein Verfahren zur Ausgabe von Audiodaten unter Berücksichtigung einer derart bestimmten kopfbezogenen Übertragungsfunktion.

Die sogenannte kopfbezogene oder auch außenohrbezogene Übertragungsfunktion wird sehr häufig auch mit der Abkürzung HRTF bezeichnet, welche sich an den englischsprachigen Begriff Head Related Transfer Function orientiert, welcher als Fachbegriff auch in andere Sprachen Eingang gefunden hat. Die HRTF beschreibt die Übertragungsfunktion des Außenohrs und ist neben Laufzeitdifferenzen zwischen den beiden Ohren eines Menschen maßgeblich für die Lokalisierung von Schallquellen. Aufgrund der unterschiedlichen Anatomie eines jeden Menschen ist die HRTF für jeden Menschen individuell. Relevant sind dabei vor allem die Kopfform, welche Einfluss auf die Schallbeugung am Kopf und den Abstand der Ohren hat, sowie die individuelle Form der Ohrmuscheln und des Gehöreingangs. Ist die HRTF einer Person bekannt, dann wird eine virtuelle Positionierung von Schallquellen im Raum möglich, um so eine Lokalisierung der Schallquelle an einer virtuell vorgegebenen Position in dem Raum zu erhalten. Diese Funktionalität wird häufig auch mit dem Begriff des 3D-Audio bezeichnet.

In sehr vielen Anwendungsfällen sind dafür jedoch neun oder mehr Lautsprecher notwendig. Ist die HRTF einer Person jedoch bekannt, kann mithilfe von lediglich zwei Lautsprechern, welche in einem rechten und einem linken Bereich bezogen auf die Person angeordnet sind, ein solches 3D-Audio virtuell erzeugt werden. Zum Erfassen der HRTF sind im Bereich der allgemeinen Audiotechnik aufwändige Messungen von Testsignalen mithilfe von Miniaturmikrofonen in jedem Gehörgang grundlegend bekannt.

Einfacher und effizienter kann es nun werden, wenn eine optische Erfassung der Anatomie bzw. Geometrie des Kopfes, der Ohrmuscheln und ihrer räumlichen Relation zueinander ermöglicht wird. Die DE 10 2020 108 449 A1 beschreibt in diesem Zusammenhang ein Verfahren zum Bereitstellen mindestens eines benutzerspezifischen binauralen Schallsignals für Fahrzeuginsassen, bei welchen die benutzerspezifische HRTF auf Basis der Anatomie der jeweiligen Person berechnet wird. Die Anatomie der jeweiligen Person wird dabei durch in dem Fahrzeug angeordnete Innenraumkameras erfasst, um so einfach und bequem ein optimiertes Audioerlebnis mittels einer größeren Zahl von Lautsprechern zu ermöglichen.

Die US 2013/0194107 A1 beschreibt ebenfalls das Erfassen und Speichern einer HRTF, um über einen Signalprozessor ein virtuelles 3D-Audio zu erzeugen. Auch hier kommen Kameras zur Erfassung der den Berechnungen zugrunde liegenden Anatomie zum Einsatz. Andere Verfahren sind aus JP 2010 067020 und DE 10 2014 210105 bekannt.

Die Erfassung der gesamten relevanten Anatomie über in einem Fahrzeug verbaute Kameras, beispielsweise im Frontbereich vor einer das Fahrzeug nutzenden Person verbauten Kameras ist in der Praxis außerordentlich schwierig, da über diese Kameras sehr häufig nicht alle relevanten Bereiche des Kopfes der entsprechenden Person zuverlässig und mit ausreichender Genauigkeit erfasst werden können. Zwar kann nun die Person aufgefordert werden, ihren Kopf entsprechend vor den Kameras zu bewegen und zu drehen, dies ist in der Praxis jedoch vergleichsweise aufwändig und wird als Komforteinbuße wahrgenommen, wenn dies bei jedem Start des 3D-Audios notwendig wird.

Die Aufgabe der hier vorliegenden Erfindung besteht deshalb darin, ein verbessertes Verfahren zum Bestimmen der kopfbezogenen Übertragungsfunktion für wenigstens eine ein Fahrzeug nutzende Person anzugeben. Ferner ist es die Aufgabe der Erfindung, ein verbessertes Verfahren zur Ausgabe von Audiodaten anzugeben.

Erfindungsgemäß wird diese Aufgabe durch das Verfahren mit den Merkmalen im Anspruch 1, und hier insbesondere im kennzeichnenden Teil des Anspruchs 1 gelöst. Vorteilhafte Ausgestaltungen und Weiterbildungen des erfindungsgemäßen Verfahrens ergeben sich aus den hiervon abhängigen Unteransprüchen. Im Anspruch 11 ist außerdem ein Verfahren zur Ausgabe von Audiosignalen angegeben, welches einen einfachen Aufbau unter Verwendung der über das Verfahren gemäß Anspruch 1 bestimmten kopfbezogenen Übertragungsfunktion ermöglicht. Auch hier ergibt sich eine vorteilhafte Ausgestaltung aus dem abhängigen Unteranspruch.

Das erfindungsgemäße Verfahren zur Bestimmung der HRTF für wenigstens eine ein Fahrzeug nutzende Person erfasst über Kameras Merkmale der Person, insbesondere also anatomische Merkmale des Kopfes und der Ohren, um hieraus in an sich bekannter Art und Weise die HRTF zu berechnen. Erfindungsgemäß ist es dabei vorgesehen, dass die Merkmale von mehreren Kameras zeitlich zumindest teilweise nacheinander erfasst werden, wobei von den Kameras zumindest eine so angeordnet ist, dass sie die Person beim Sich-Annähern und Öffnen des Fahrzeugs im Außenbereich des Fahrzeugs erfasst.

Das erfindungsgemäße Verfahren ermöglicht also bereits bei einer Annäherung und beim Einsteigen einer Person diese im Außenbereich des Fahrzeugs zu erfassen. Damit steht sehr früh vor dem Starten des Fahrzeugs eine erste Basis von Merkmalen zur Bestimmung der HRTF zur Verfügung. Aufgrund der Tatsache, dass die Person sich zu diesem Zeitpunkt noch im Außenbereich, also in der äußeren Umgebung des Fahrzeugs befindet, lassen sich hier über die Kamera sehr gute Bilder zur Analyse der entsprechenden anatomischen Merkmale erfassen. Vorzugsweise kann die Kamera dabei mehrere Bilder hintereinander aufnehmen, wie die Person sich dem Fahrzeug annähert und dieses öffnet bzw. in dieses einsteigt. Damit lässt sich die Person unter verschiedenen Winkeln und typischerweise bei verschiedenen Beleuchtungsszenarien, mit unterschiedlichen Schattenwürfen erfassen. Diese Daten lassen sich dann entsprechend verarbeiten und bilden eine wertvolle erste Grundlage, um auf der Basis der Kameradaten ein möglichst präzises Modell der Ohren und der für die HRTF relevanten Teile des Kopfes oder auch des gesamten Kopfes auszubilden.

Prinzipiell kann hierfür eine Kamera im Inneren des Fahrzeugs verwendet werden, welche durch die Scheibe nach außen blickt. Dies hat den Vorteil eines guten Schutzes der Kamera gegenüber Vandalismus. Besonders günstig ist es jedoch, wenn eine im Außenbereich des Fahrzeugs vorgesehene Außenkamera Verwendung findet. Dies kann dabei insbesondere eine eigens für diesen Zweck angeordnete Kamera oder besonders bevorzugt eine ohnehin vorhandene Kamera sein. So kann beispielsweise eine Kamera Verwendung finden, welche ansonsten zur Gesichtserkennung einer sich annähernden Person eingesetzt wird, um auf Basis des erkannten Gesichts oder anderer biometrischer Merkmale den Zugang zu dem Fahrzeug zu gewährleisten.

Die hierfür eingesetzte Kamera kann insbesondere im Bereich der B-Säule angeordnet sein. Ergänzend oder alternativ ist es auch denkbar, eine Kamera im Bereich der A-Säule zu verwenden oder auch eine im Bereich des Rückspiegels angeordnete Kamera. Insbesondere beim Verzicht auf einen tatsächlichen Rückspiegel und den Ersatz dieses Rückspiegels durch eine Kamera kann auch diese zum Einsatz kommen. Sind ohnehin mehrere Kameras im Außenbereich des Fahrzeugs verbaut, können Bilder auch von verschiedenen Kameras erzeugt werden, um die mögliche Auswahl an Beleuchtungsszenarien, Blickwinkeln auf die relevanten anatomischen Merkmale der Person und dergleichen zu vergrößern.

Eine weitere außerordentliche günstige Ausgestaltung des erfindungsgemäßen Verfahrens sieht es dann ferner vor, dass weitere Kameras Merkmale der Person im Innenraum des Fahrzeugs erfassen. Hierzu können insbesondere die an sich bekannten, häufig ohnehin vorhandenen Innenraumkameras des Fahrzeugs Verwendung finden. Dies kann beispielsweise eine zentrale Kamera in einer Dachbedieneinheit sein, oder es können Kameras sein, welche ansonsten auch zur Erfassung der Blickrichtung, zur Erfassung von Gesten, zur Überwachung der Aufmerksamkeit einer das Fahrzeug fahrenden Person oder dergleichen eingesetzt werden.

Insbesondere kann es gemäß einer außerordentlich günstigen Weiterbildung des erfindungsgemäßen Verfahrens vorgesehen sein, dass, beispielsweise ausgehend von einem Öffnen der Tür und einem anschließenden erwarteten Einstieg der Person in das Fahrzeug eine Kamera in einer Instrumententafel des Fahrzeugs zur Erfassung einer ersten Seite des Kopfes beim Einsteigen und eine Kamera in einer zentral zwischen den Sitzen angeordneten Dachbedieneinheit zur Erfassung der zweiten Seite des Kopfes beim oder nach dem Einsteigen genutzt wird. Eine solche Kamera könnte beispielsweise bei einem Fahrzeug mit Linkslenkung bei einer das Fahrzeug fahrenden Person beim Einsteigen zuerst die linke Kopfseite und im Anschluss dann mit der zentralen Kamera, welche insbesondere in der Dachbedieneinheit integriert ist, die rechte Kopfseite erfassen. Die Daten können dann mit einer nach Abschluss des Einsteigens erfassten Frontansicht der Person über die Kamera in der Instrumententafel und den bereits vor dem Einsteigen erfassten Bildern aus dem Außenbereich des Fahrzeugs kombiniert werden, um so eine ideale Modellierung des Kopfes bzw. der für die HRTF relevanten Bereiche des Kopfes und der Ohren vorzunehmen. Auf dieser Basis lässt sich die HRTF dann einfach und effizient berechnen und kann entsprechend gespeichert werden, um bei einer beispielsweise durch die Gesichtserkennung wiedererkannten Person oder auch einer durch einen personalisierten Schlüssel, ein personalisiertes Smartphone, eine Smartwatch oder dergleichen erkannten Person direkt auf diese HRTF zuzugreifen, falls das Abspielen von 3D-Audiodaten in dem Fahrzeug gewünscht ist.

Die Erfassung bereits im Außenbereich des Fahrzeugs ermöglicht es außerdem in jedem Fall, die Person dort effizient zu erfassen, sodass durch einen Vergleich mit bereits hinterlegten Daten festgestellt werden kann, ob die Anatomie der Person sich verändert hat, was über die Zeit typischerweise vorkommt, oder ob nicht. Für den Fall, dass die Anatomie unverändert ist, kann auf das Erfassen weiterer Merkmale zur Neuberechnung der HRTF verzichtet werden. Hat sich die Anatomie in den für die HRTF relevanten Bereichen entsprechend verändert, dann kann die Erfassung in den oben beschriebenen Schritten erfolgen, um die HRTF neu zu berechnen.

Gemäß einer weiteren sehr günstigen Ausgestaltung des erfindungsgemäßen Verfahrens kann es dabei vorgesehen sein, dass der Kopf der Person während der Erfassung, und dies gilt insbesondere auch für die Erfassung im Außenbereich des Fahrzeugs, mit infrarotnahem Licht beleuchtet wird. Dies ermöglicht auch bei schlechten Sichtbedingungen, beispielsweise in der Dämmerung oder bei Dunkelheit, eine effiziente Erfassung der relevanten Merkmale der entsprechenden Person, sodass die für die HRTF benötigten Merkmale effizient erfasst und die Funktion zuverlässig berechnet werden kann.

Sieht das System nach dem Einsteigen der Person einen Bedarf an weiteren Daten, da nicht alle Blickwinkel korrekt erfasst worden sind, insbesondere wenn die Person zum ersten Mal in das Fahrzeug einsteigt, dann kann gemäß des Verfahrens die Person auch aufgefordert werden, bei einem solchen Bedarf nach dem Einsteigen ihren Kopf von der einen zur anderen Seite hin zu drehen, um die Erfassung der Merkmale für die Berechnung der HRTF nochmals zu verbessern.

Mit Vorteil können mit dem Verfahren die in Fahrzeugen verbauten Audiosystem verbessert werden. Hierzu werden z.B. die mit der HRTF gewonnen Daten in Echtzeit über das Ethernet in den zentralen Audioverstärker übertragen. Dort wird über einen auf die Fahrzeugkabine abgestimmten Algorithmus im DSP (Digital Sound Prozessor) das Audiosignal entsprechend bearbeitet und via Kabel an die Lautsprecher im Fahrzeugsitz abgegeben.

Mit einem Verfahren nach Anspruch 9 können dann mit Vorteil mehrere Lautsprecher im Fahrzeug angesteuert werden.

Ist die HRTF einer Person bekannt, ist die virtuelle Positionierung von Schallquellen im Raum möglich. Hierbei wird das Signal mit der aus dem Stand der Technik an sich bekannten HRIR (Head-related Impulse Response) der entsprechenden Schalleinfallsrichtung gefaltet und somit eine Lokalisierung aus dieser Richtung erzeugt.

3D-Audio ist die Zukunft, erfordert jedoch 9 oder mehr Lautsprecher. Ist die HRTF einer Person bekannt, kann mit Hilfe von nur zwei Lautsprechern 3D-Audio virtuell erzeugt werden. Man kann also mit zwei Lautsprechern einen Klangeindruck wie von 9 Lautsprechern erzeugen.

Wie bereits eingangs erwähnt lässt sich nun mit einer auf Basis der so erfassten Merkmale berechneten HRTF ein virtuelles 3D-Audio erzeugen, um ein optimales 3D-Audioklangerlebnis für die Person in dem Fahrzeug zu gewährleisten. Um dies mit geringem Aufwand hinsichtlich der Hardware umzusetzen, kann es bei dem erfindungsgemäßen Verfahren zur Ausgabe von Audiodaten vorgesehen sein, dass die Ausgabe der Audiodaten über einen Soundprozessor basierend auf der berechneten HRTF für die jeweilige Person erfolgt, wobei in dem Fahrzeug zwei für die jeweilige Person in dem Fahrzeugsitz integrierte Lautsprecher Verwendung finden. Das Verfahren nutzt also, anders als die Verfahren im eingangs genannten Stand der Technik lediglich zwei Lautsprecher je Person, um ein virtuelles 3D-Audio zu realisieren. Diese Lautsprecher sind dabei in dem Fahrzeugsitz der jeweiligen Person integriert. Gemäß einer besonders günstigen Ausgestaltung sind sie in der Sitzlehne in etwa in Schulterhöhe einer durchschnittlich großen Person angeordnet. Sie sind idealerweise mit dem Soundprozessor über Kabel verbunden, um so in Echtzeit und ohne bei einer Funkverbindung prinzipiell denkbare Latenzen das vom Soundprozessor generierten virtuellen 3D-Audio abzustrahlen und der entsprechenden Person ein optimales Audioerlebnis basierend auf ihrer individuellen HRTF zu ermöglichen.

Weitere vorteilhafte Ausgestaltungen der erfindungsgemäßen Verfahren ergeben sich auch aus dem Ausführungsbeispiel, welches nachfolgend unter Bezugnahme auf die Figuren näher beschrieben ist.

Dabei zeigen:
- Fig. 1: schematische Seitenansicht eines Fahrzeugs, welchem sich eine Person nähert;
- Fig. 2: eine Draufsicht auf ein Fahrzeug mit Blick in den Fahrzeuginnenraum sowie einer in dem Innenraum angedeuteten Person.

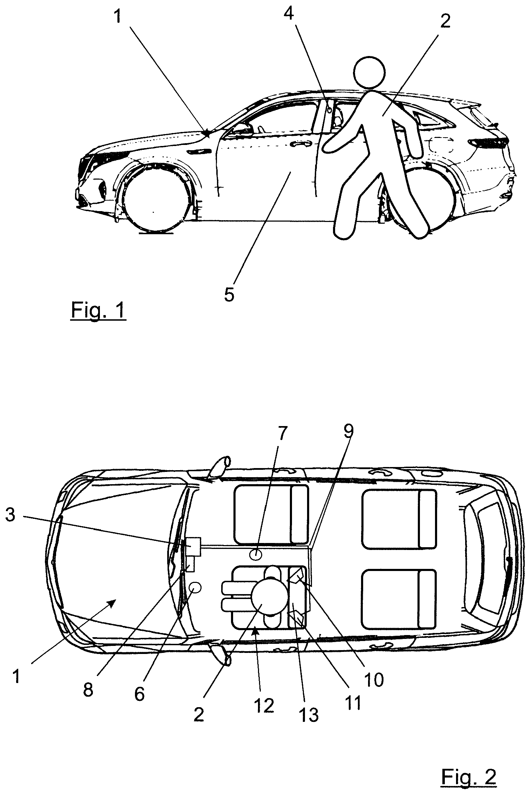

Eine Signalquelle, wie zum Beispiel ein Musikstück wird beim Musikhören in einem in den Figuren 1 und 2 angedeuteten Fahrzeug 1 nicht direkt ins Innenohr geleitet, sondern erfährt je nach Schalleinfallsrichtung unterschiedliche Reflexionsmuster am Körper, am Kopf und den Ohrmuscheln. Durch Überlagerung des Direktschalls und der Reflexion ergeben sich dabei Interferenzen, welche das menschliche Gehirn als Signalrichtung interpretieren kann. Die sogenannte kopfbezogene Übertragungsfunktion, welche gelegentlich auch als außenohrbezogene Übertragungsfunktion bezeichnet wird, beschreibt ebendiese Übertragung vom Bereich des Außenohrs in den Gehörgang. Sie wird typischerweise auch als HRTF bezeichnet, was auf der englischen Bezeichnung Head Related Transfer Function basiert. Diese Übertragungsfunktion ist zusammen mit den Laufzeitdifferenzen zwischen den beiden Ohren maßgeblich für die Lokalisierung von Schallquellen durch die entsprechende Person 2, welche in der Figur 1 und 2 entsprechend dargestellt ist, verantwortlich. Aufgrund der unterschiedlichen Anatomie jedes einzelnen Menschen ist die HRTF für jeden Menschen individuell. Relevant sind dabei die individuelle Kopfform, welche Einfluss auf die Schallbeugung am Kopf hat und den Abstand der Ohren beeinflusst. Außerdem spielt die individuelle Form der Ohrmuscheln und des Gehöreingangs eine Rolle.

Um nun mit einfachen Mitteln ein hochwertiges 3D-Audioerlebnis mit einer virtuellen Positionierung der Schallquellen im Raum zu ermöglichen, ist es nun entscheidend, dass die individuelle HRTF der jeweiligen Person 2 bekannt ist. Dann lässt sich das Audiosignal mittels der sogenannten Head Related Impulse Response (HRIR) der entsprechenden Einfallsrichtung falten und somit eine Lokalisierung aus dieser Richtung erzeugen. Ein in Figur 2 dargestellter Digital Sound Processor (DSP) 3 ermöglicht so die Erzeugung eines 3D-Audiosounds für die jeweilige Person 2.

Um nun die für die jeweilige Person 2 individuelle HRTF einfach und effizient erfassen zu können, wird, wie es in der Darstellung der Figur 1 angedeutet ist, für den Fall, dass die Person 2 sich dem Fahrzeug 1 annähert, um dieses zu öffnen, das Gesicht bzw. der Kopf der Person mithilfe einer ersten Kamera 4 in der sogenannten B-Säule des Fahrzeugs 1 erfasst. Diese Kamera 4 wird oft ohnehin vorhanden sein, um über eine Gesichtserkennung beispielsweise das Fahrzeug 1 für berechtigte Personen zu entriegeln. Über diese Kamera lassen sich nun bei verschiedenen Sichtwinkeln auf den Kopf der Person 2 und unterschiedlichen Lichtverhältnissen erste Daten sammeln, um über Bildanalyseverfahren und mathematische Berechnungen einerseits eine Gesichtserkennung zu realisieren und andererseits Koordinaten von Gesichtsmerkmalen wie Augen, Nase, Mund, Ohren und Kopfform zu definieren. Vorzugsweise erfolgt die Datenerfassung dabei über infrarotnahes Licht, welches vom Gesicht reflektiert wird, um so bei allen Beleuchtungssituationen eine ausreichende Gesichtserkennung zu gewährleisten. Mit diesem ersten Datensatz stehen also auch erste Daten zur Berechnung der individuellen HRTF zur Verfügung.

Beim Öffnen der Fahrzeugtür 5, hier beispielsweise der Fahrertür und beim sich daran anschließenden Einsteigen erfasst dann eine zweite in einem Kombiinstrument des Fahrzeugs 1 angeordnete Kamera 6, welche in der Darstellung der Figur 2 zu erkennen ist, die Anatomie der linken Kopfseite der Person 2 während des Einsteigens. Das System zur Berechnung der HRTF erhält so einen weiteren Datensatz. Anatomische Daten der rechten Kopfseite lassen sich nun über eine weitere Kamera 7 in einer Dachbedieneinheit erfassen, welche typischerweise im Himmel des Fahrzeugs, also in dessen Dachbereich angeordnet ist. Die zweite Kamera 6 erfasst abschließend optional den Kopf bzw. das Gesicht der Person 2 von vorne, um weitere Daten zu generieren.

Wird nun über ein Audiosystem des Fahrzeugs angefragt, ob ein persönlicher High-End-Sound aktiviert werden soll und wird dies entsprechend bestätigt, dann wird ein 3D-Audiosignal ausgegeben, welches basierend auf den individuellen Merkmalen des Fahrzeuginnenraums, welche sich nicht verändern und der individuellen HRTF für die jeweilige Person 2 speziell generiert wird. Reichen die zu diesem Zeitpunkt vorliegenden Daten zum Ermitteln einer zuverlässigen individuellen HRTF noch nicht aus, dann kann ein Mediensystem des Fahrzeugs die Person 2 auch auffordern, ihren Kopf nochmals langsam von links nach rechts zu drehen. Hierdurch können weitere Daten über die beiden Kameras 6, 7 im Innenraum des Fahrzeugs erfasst und mit den bereits erfassten Daten abgeglichen oder zur Ergänzung derselben genutzt werden. Die so erfassten Daten werden dann idealerweise über Echtzeit und ein fahrzeuginternes Ethernet in einen zentralen Audioverstärker 8 übertragen, um dort über einen auf den Fahrzeuginnenraum abgestimmten Algorithmus entsprechend be- bzw. verarbeitet zu werden. Über den bereits angesprochenen DSP 3 wird das Audiosignal dann vorzugsweise über Kabel 9 angeschlossene Lautsprecher 10, 11 übertragen. Diese sind im Fahrzeugsitz 12 der Person 2 und hier insbesondere in dessen Sitzlehne 13 in etwa in Schulterhöhe einer durchschnittlich großen Person integriert. Über lediglich zwei derartige Lautsprecher 9, 10 auf Schulterhöhe in der Sitzlehne 13 lässt sich so eine virtuelle 3D-Klangwelt erzeugen, welche zu einem einmaligen Hörgenuss führt. Ohne den Einsatz der entsprechenden Algorithmen und der HRTF ließen sich die Lautsprecher 10, 11 auch für eine einfache Stereowiedergabe verwenden, welche für die Person 2 als eher von hinten hörbar zu erleben wäre.

Bei einer Annäherung und beim Einsteigen kann nun jedes Mal automatisch startend über die erste Kamera 4 in der B-Säule des Fahrzeugs 1 die Anatomie der sich annähernden Person 2 erfasst und mit den gespeicherten Daten abgeglichen werden. Da sich die Anatomie von Personen und somit auch ihre HRTF im Laufe der Zeit ändern können, kann auf dieser Basis eine Nachjustierung erfolgen. Das ganze System lässt sich außerdem mit Updates versehen, insbesondere mit Over-the-air-Updates, falls zu einem späteren Zeitpunkt ein verbesserter Algorithmus zur Verfügung stehen sollte. Über das Mediensystem des Fahrzeugs 1 lässt sich dann für alle oder auch nur für einige ausgewählte Personen 2 der persönliche High-End-Sound aktivieren, sodass immer, wenn diese Personen 2 in dem Fahrzeug erkannt werden, beispielsweise anhand einer Gesichtserkennung oder auch anhand von individualisierten Fahrzeugschlüsseln, Smartphones, Smartwatches und dergleichen, welche bei dem Fahrzeug 1 entsprechend registriert und mit der Person verknüpft sind, das 3D-Audio verwendet wird. Somit besteht beispielsweise auch die Möglichkeit, den High-End-Sound nur für bestimmte Personen 2 freizugeben, und beispielsweise für andere das Fahrzeug 1 nutzende Personen entsprechend zu sperren.

## Patentansprüche

1. Verfahren zur Bestimmung der kopfbezogenen Übertragungsfunktion (HRTF) für wenigstens eine ein Fahrzeug (1) nutzende Person (2), wobei die kopfbezogene Übertragungsfunktion (HRTF) anhand von über Kameras (4, 6, 7) erfasste Merkmale der Person (2) berechnet wird,
**dadurch gekennzeichnet, dass**
die Merkmale von mehreren Kameras (4, 6, 7) zeitlich zumindest teilweise nacheinander erfasst werden, wobei zumindest eine der Kameras (4) so angeordnet ist, dass sie die Person (2) beim Sich-Annähern und Öffnen des Fahrzeugs (1) im Außenbereich des Fahrzeugs (1) erfasst.

2. Verfahren nach Anspruch 1,
**dadurch gekennzeichnet, dass**
als zur Erfassung der Person (2) im Außenbereich vorgesehene Kamera (4) eine Außenkamera (4) des Fahrzeugs (1) verwendet wird.

3. Verfahren nach Anspruch 2,
**dadurch gekennzeichnet, dass**
die als Außenkamera (4) verwendete Kamera im Bereich der B-Säule und/oder der A-Säule oder eines Rückspiegels des Fahrzeugs (1) angeordnet ist, wobei dieser Rückspiegel auch durch die Kamera ausgebildet sein kann.

4. Verfahren nach einem der Ansprüche 1 bis 3,
**dadurch gekennzeichnet, dass**
weitere Kameras (6, 7) Merkmale der Person (2) im Innenraum des Fahrzeugs (1) erfassen.

5. Verfahren nach Anspruch 4,
**dadurch gekennzeichnet, dass**
eine Kamera (6) in einer Instrumententafel zur Erfassung einer ersten Seite des Kopfs beim Einsteigen und eine Kamera (7) in einer zentral zwischen den Sitzen angeordneten Dachbedieneinheit zur Erfassung einer zweiten Seite des Kopfs beim oder nach dem Einsteigen genutzt wird.

6. Verfahren nach einem der Ansprüche 1 bis 5,
**dadurch gekennzeichnet, dass**
der Kopf der Person (2) während der Erfassung mit infrarotnahem Licht beleuchtet wird.

7. Verfahren nach einem der Ansprüche 1 bis 6,
**dadurch gekennzeichnet, dass**
die Merkmale und die kopfbezogene Übertragungsfunktion (HRTF) für die jeweilige Person (2) gespeichert wird, wobei bei erneuten Nutzung des Fahrzeugs (1) durch diese Person (2) die Merkmale neu erfasst und mit den gespeicherten Merkmalen verglichen werden, wobei die kopfbezogene Übertragungsfunktion im Falle einer Veränderung der Merkmale angepasst wird.

8. Verfahren nach einem der Ansprüche 1 bis 7,
**dadurch gekennzeichnet, dass**
bei Bedarf die Person (2) nach dem Einsteigen aufgefordert wird, ihren Kopf von der einen Seite zur anderen Seite zu drehen, wobei Bilder erfasst werden, um die Erfassung der Merkmale für die Berechnung der kopfbezogenen Übertragungsfunktion (HRTF) zu verbessern.

9. Verfahren nach einem der Ansprüche 1 bis 8,
**dadurch gekennzeichnet, dass**
mit der Übertragungsfunktion der Digital Sound Prozessor angesteuert wird und ein Audiosignal angepasst wird.

10. Verfahren nach Anspruch 9,
**dadurch gekennzeichnet, dass**
mit dem Audiosignal mindestens zwei Lautsprecher angesteuert werden.

11. Verfahren zur Ausgabe von 3D-Audiodaten über einen Sound-Prozessor (3) basierend auf der nach Anspruch 1 bestimmten kopfbezogenen Übertragungsfunktion (HRTF), wobei als Schallquelle genau zwei für die jeweilige Person (2) in deren Fahrzeugsitz (12) integrierte Lautsprecher (10, 11) dienen.

12. Verfahren nach Anspruch 11,
**dadurch gekennzeichnet, dass**
die zwei Lautsprecher (10, 11) in Schulterhöhe einer durchschnittlich großen Person (2) in die Sitzlehne (13) integriert werden.

## Claims

1. Method for determining the head-related transfer function (HRTF) for at least one person (2) using a vehicle (1), wherein the head-related transfer function (HRTF) is calculated based on features of the person (2) which are captured by cameras (4, 6, 7),
**characterized in that**
the features are captured by a plurality of cameras (4, 6, 7) at least partially one after the other over time, wherein at least one of the cameras (4) is arranged such that it captures the person (2) in the external region of the vehicle (1) as they approach and open the vehicle (1).

2. Method according to claim 1,
**characterized in that**
an external camera (4) of the vehicle (1) is used as the camera (4) intended for capturing the person (2) in the external region.

3. Method according to claim 2,
**characterized in that**
the camera used as the external camera (4) is arranged in the region of the B-pillar and/or the A-pillar or a rear-view mirror of the vehicle (1), wherein this rear-view mirror can also be formed by the camera.

4. Method according to any of claims 1 to 3,
**characterized in that**
additional cameras (6, 7) capture features of the person (2) in the interior of the vehicle (1).

5. Method according to claim 4,
**characterized in that**
a camera (6) in an instrument panel is used to capture a first side of the head when entering and a camera (7) in a roof control unit arranged centrally between the seats is used to capture a second side of the head during or after entering.

6. Method according to any of claims 1 to 5,
**characterized in that**
the head of the person (2) is illuminated using near-infrared light during the capture.

7. Method according to any of claims 1 to 6,
**characterized in that**
the features and the head-related transfer function (HRTF) are stored for the relevant person (2), wherein when the vehicle (1) is used again by this person (2), the features are captured again and compared with the stored features, wherein the head-related transfer function is adjusted in the event of a change in the features.

8. Method according to any of claims 1 to 7,
**characterized in that**
if necessary, the person (2) is asked to turn his head from side to side after entering, wherein images are captured in order to improve the capture of the features for the calculation of the head-related transfer function (HRTF).

9. Method according to any of claims 1 to 8,
**characterized in that**
the transfer function is used to control the digital sound processor and adjust an audio signal.

10. Method according to claim 9,
**characterized in that**
at least two loudspeakers are controlled by the audio signal.

11. Method for outputting 3D audio data via a sound processor (3) based on the head-related transfer function (HRTF) determined according to claim 1, wherein exactly two loudspeakers (10, 11) integrated into the vehicle seat (12) of the relevant person (2) serve as the sound source.

12. Method according to claim 11,
**characterized in that**
the two loudspeakers (10, 11) are integrated into the seat backrest (13) at shoulder height of an average-sized person (2).

## Revendications

1. Procédé pour la détermination de la fonction de transfert liée à la tête (HRTF) pour au moins une personne (2) utilisant un véhicule (1), dans lequel la fonction de transfert liée à la tête (HRTF) est calculée à l'aide de caractéristiques de la personne (2) détectées par des caméras (4, 6, 7),
**caractérisé en ce que**
les caractéristiques sont détectées par plusieurs caméras (4, 6, 7) au moins partiellement l'une après l'autre dans le temps, dans lequel au moins une des caméras (4) est disposée de manière à détecter la personne (2) lors de l'approche et de l'ouverture du véhicule (1) dans la zone extérieure du véhicule (1).

2. Procédé selon la revendication 1,
**caractérisé en ce**
**qu'**on utilise comme caméra (4) prévue pour la détection de la personne (2) dans la zone extérieure une caméra extérieure (4) du véhicule (1).

3. Procédé selon la revendication 2,
**caractérisé en ce que**
la caméra utilisée comme caméra extérieure (4) est disposée dans la zone du montant B et/ou du montant A ou d'un rétroviseur du véhicule (1), dans lequel ce rétroviseur peut également être réalisé par la caméra.

4. Procédé selon l'une des revendications 1 à 3,
**caractérisé en ce que**
d'autres caméras (6, 7) détectent des caractéristiques de la personne (2) dans l'habitacle du véhicule (1).

5. Procédé selon la revendication 4,
**caractérisé en ce**
**qu**'une caméra (6) dans un tableau de bord est utilisée pour la détection d'un premier côté de la tête lors de l'entrée dans le véhicule et une caméra (7) dans une unité de commande de toit disposée au centre entre les sièges est utilisée pour la détection d'un second côté de la tête lors de l'entrée dans le véhicule ou après celle-ci.

6. Procédé selon l'une des revendications 1 à 5,
**caractérisé en ce que**
la tête de la personne (2) est éclairée par une lumière proche de l'infrarouge pendant la détection.

7. Procédé selon l'une des revendications 1 à 6,
**caractérisé en ce que**
les caractéristiques et la fonction de transfert liée à la tête (HRTF) sont mémorisées pour la personne (2) respective, dans lequel les caractéristiques sont à nouveau détectées et comparées aux caractéristiques mémorisées lors d'une nouvelle utilisation du véhicule (1) par cette personne (2), dans lequel la fonction de transfert liée à la tête est adaptée en cas de modification des caractéristiques.

8. Procédé selon l'une des revendications 1 à 7,
**caractérisé en ce que**
si nécessaire, la personne (2) est invitée à tourner la tête d'un côté à l'autre après être montée dans le véhicule, dans lequel des images sont détectées afin d'améliorer la détection des caractéristiques pour le calcul de la fonction de transfert liée à la tête (HRTF).

9. Procédé selon l'une des revendications 1 à 8,
**caractérisé en ce que**
la fonction de transfert permet de commander le processeur de son numérique et d'adapter un signal audio.

10. Procédé selon la revendication 9,
**caractérisé en ce que**
le signal audio permet de commander au moins deux haut-parleurs.

11. Procédé pour la sortie de données audio 3D par l'intermédiaire d'un processeur de son (3) basé sur la fonction de transfert liée à la tête (HRTF) déterminée selon la revendication 1, dans lequel exactement deux haut-parleurs (10, 11) intégrés pour la personne (2) respective dans son siège de véhicule (12) servent de source sonore.

12. Procédé selon la revendication 11,
**caractérisé en ce que**
les deux haut-parleurs (10, 11) sont intégrés dans le dossier du siège (13) à la hauteur des épaules d'une personne (2) de taille moyenne.
